# EUROPÄISCHE PATENTSCHRIFT

(11) **EP 2 130 465 B1**
(45) Veröffentlichungstag und Bekanntmachung des Hinweises auf die Patenterteilung: **14.08.2013**
(21) Anmeldenummer: 09100319.4
(22) Anmeldetag: 04.06.2009
(51) Int. Cl.: A47J 31/42, A47J 42/50

(54) **Kaffeevollautomat mit einem Bohnenbehälter mit Sicherungselement**
Automated coffee machine comprising a bean container with safety element
Machine à café automatique avec un réservoir à grains doté d'un élément de sécurité

(30) Priorität: 04.06.2008 DE 102008026789
(43) Veröffentlichungstag der Anmeldung: 09.12.2009
(73) Patentinhaber: BSH Bosch und Siemens Hausgeräte GmbH, 81739 München (DE)
(72) Erfinder: Münch, Reimund, 81543 München (DE)

(56) Entgegenhaltungen:
- EP-A- 0 608 804
- DE-A1- 2 926 389
- JP-A- 9 248 471
- US-A- 5 174 194

## Beschreibung

Die Erfindung betrifft einen Kaffeevollautomaten mit einem Bohnenbehälter für Bohnen, die im Betrieb über eine Abgabeöffnung des Bohnenbehälters in einen Transportschacht mit einer Transportschnecke und/ einem Mahlwerk gelangen, und mit einem Sicherungselement im Bereich der Abgabeöffnung, das einen Spalt mit dem Bohnenbehälter bildet, der einen unmittelbaren. Eingriff eines Benutzers in die Abgabeöffnung verhindert.

Der Bohnenbehälter eines Kaffeevollautomaten besitzt in der Regel an seiner Unterseite eine Abgabeöffnung, in die die im Wesentlichen trichterförmig ausgebildete Unterseite des Bohnenbehälters mündet. Die Bohnen gelangen über die Wirkung der Schwerkraft zur und in die Abgabeöffnung, von wo aus sie entweder direkt oder über eine kurze Transportschnecke in ein Mahlwerk fließen. Der Bohnenbehälter wird in der Regel durch eine Öffnung an der der Abgabeöffnung gegenüberliegenden Oberseite des Behälters befüllt. Die Befüllöffnung ist im Allgemeinen sehr groß, damit die Kaffeebohnen aus z. B. Ein-Kilogramm-Gebinden bequem eingefüllt werden können. Die DE 2926389 offenbart eine Kaffeemühle mit einem Mahlwerk, einem Mahlgut-Vorratsbehälter und einem, eine Antriebseinrichtung und einen Mehl-Auffangbehälter umfassenden Gerätegehäuse. Um Mahlgut-Vorratsbehälter und Gerätegehäuse lösbar auszuführen, ist eine Verschlusskappe mit einem sich gegen die Auslauföffnung hin verjüngenden, schwach konischen Umfangsrand vorgesehen. Diese leichte Zugänglichkeit des Innenraums des Bohnenbehälters birgt die Gefahr, dass Benutzer versehentlich oder vor allem Kinder mutwillig während des Betriebs des Kaffeevollautomaten in den Bohnenbehälter greifen. Insbesondere, wenn sich darin kaum noch Bohnen befinden, besteht die Gefahr, dass sie durch die Abgabeöffnung hindurch in drehende Teile des Kaffeeautomaten greifen und sich verletzen.

Um dies zu verhindern, sind Abdeckungen der Abgabeöffnung bekannt, die durch Verengung des Durchtrittsquerschnitts der Abgabeöffnung einen unmittelbaren Eingriff in die Abgabeöffnung verhindern sollen. Die Abdeckung bildet mit der meist trichterförmigen Bodenfläche des Bohnenbehälters einen Spalt, durch den Bohnen gelangen können, nicht jedoch die Finger eines Menschen. Die Funktionssicherheit dieser Abdeckungen wird durch einen VDE-Messfinger geprüft, der verhältnismäßig schlank und lang ist. Die bekannten Abdeckungen stützen sich über Stege an der Bodenfläche des Bohnenbehälters ab und lassen dem Boden gegenüber also einen Spalt frei, der gerade so schmal ist, dass ein Finger kaum eindringen kann, Bohnen aber passieren können. Diese enge Dimensionierung hat jedoch zur Folge, dass der Spalt im Betrieb der Maschine sich durch quer liegende Kaffeebohnen verlegen kann. Dies wird noch unterstützt durch die Stege, die die Abdeckung in ihrer Lage halten. Dadurch kann es zu einer so genannten Brückenbildung der Kaffeebohnen kommen, die die Abgabeöffnung zumindest teilweise blockiert. Auch auf der Abdeckung selbst können Kaffeebohnen liegen bleiben. Dadurch können bei einem Zubereitungsprozess des Kaffeevollautomaten nicht genügend Kaffeebohnen nachrutschen, so dass nicht genügend Kaffeemehl für eine Tassenportion zur Verfügung steht. Die veränderte Dosierung kann zu unerwünschten Geschmacksabweichungen oder zu Störungsmeldungen führen. Bei zur Neige gehendem Bohnenvorrat kann ein großer unerwünschter Kaffeebohnenrest im Bohnenbehälter zurück bleiben, wodurch weniger Tassenportionen aus dem Bohnenvorrat bezogen werden können.

Aufgabe der Erfindung ist es daher, ein Sicherungselement für die Abgabeöffnung eines Bohnenbehälters anzugeben, das einen Stau der Kaffeebohnen im Bohnenbehälter weitgehend ausschließt.

Diese Aufgabe wird bei einem Kaffeevollautomaten der eingangs genannten Art dadurch gelöst, dass das Sicherungselement im Bereich der Abgabeöffnung auf der Achse der Transportschnecke gelagert ist.

Erfindungsgemäß ist das Sicherungselement mit der Transportschnecke mitdrehend angeordnet. Die Erfindung verlässt also das bekannte Konstruktionsprinzip, wonach das Sicherungselement von einem feststehenden Deckel über der Abgabeöffnung gebildet wird. Sie verfolgt vielmehr das Prinzip eines rotierenden Sicherungselements. Dies hat den Vorteil, dass sich auf dem Sicherungselement selbst keine Bohnen halten können, die durch Brückenbildung die Abgabeöffnung verlegen und blockieren können. Das Sicherungselement sorgt mit seiner Rotation vielmehr dafür, dass die Bohnen im Bereich der Abgabeöffnung ständig in Bewegung bleiben, ihre Haftreibung untereinander und an der Behälterwandung also unterbunden wird. Dadurch können sie leichter durch den Spalt zwischen Sicherungselement und Bodenfläche des Bohnenbehälters befördert werden. Die Rotation des Sicherungselements hat zudem den weiteren vorteilhaften Effekt, dass ein Benutzer, worunter nach der Erfahrung nach auch ein spielendes Kind zu subsumieren ist, bei der Berührung mit dem sich drehenden Sicherungselement die Hand reflexartig zurückzieht, weil er im Bohnenbehälter kein bewegliches Teil vermuten, sondern eher eine Verletzungsgefahr befürchtet. Neben dem konstruktiven Vorteil des rotierenden Sicherungselements nutzt es also auch einen psychologischen Effekt.

Die Drehung kann über einen separaten, beispielsweise elektromotorischen Antrieb erfolgen. Nach einer vorteilhaften Ausgestaltung der Erfindung kann die Rotation des Sicherungselements mit der Drehung im Mahlwerk beispielsweise über ein Getriebe gekoppelt sein, also die Drehbewegung während des Betriebs des Kaffeeautomaten im Mahlwerk nutzen. Dies erfordert nur einen geringeren konstruktiven Aufwand für die Drehbewegung des Sicherungselements. Sie kann dabei hinsichtlich der Geschwindigkeit über ein Über- oder Untersetzungsgetriebe entkoppelt sein.

Dem Mahlwerk ist in der Fließrichtung der Kaffeebohnen eine Transportschnecke vorgeschaltet, an deren oberen Abschnitt, der in die Abgabeöffnung weist oder in sie hineinragt, das Sicherungselement angebracht ist.

Auch das erfinderische Sicherungselement hat den bekannten Zweck, zwischen seiner Mantelfläche und dem Bodenbereich bzw. den Wandungen der Abgabeöffnung einen Spalt auszubilden, durch den Bohnen gelangen können, jedoch keine menschlichen Finger. Dieser Zweck wird in der Regel durch eine Dimensionierung des Spaltes erreicht. Nach einer vorteilhaften Ausgestaltung der Erfindung kann das Sicherungselement den Weg der Bohnen durch die Abgabeöffnung von einem Außenrand des Sicherungselements bis zu einem verletzungsgefährlichen Bereich des Mahlwerks oder der Transportschnecke soweit verlängern, dass ein menschlicher Finger nicht bis zur Transportschnecke oder dem Mahlwerk gelangen kann. Die Erfindung macht sich also die Erkenntnis zunutze, dass nicht nur die Breite des Spalts zwischen Sicherungselement und Bohnenbehälter die Schutzfunktion des Sicherungselements bestimmt, sondern auch die Entfernung des Spalts vom verletzungsrelevanten Bereich des Mahlwerks. Es besteht somit ein Zusammenhang zwischen der Spaltbreite einerseits und dieser Weglänge andererseits. Je größer der Durchtrittsspalt ausgebildet ist, umso länger muss der oben genannte Weg der Bohnen bemessen sein, damit kein menschlicher Finger verletzt werden kann. Je größer der Spalt also gewählt wird, um ein zuverlässiges Hindurchtreten der Bohnen zu ermöglichen und ein Stauen zu verhindern, umso länger sollte der Bohnenweg sein. Ein größerer Spaltquerschnitt, der ein vollständiges und rückstandfreies Abfließen der Kaffeebohnen aus dem Bohnenbehälter sicherstellt, kann also durch einen längeren Fließweg der Bohnen zwischen dem Sicherungselement und dem verletzungsrelevanten Bereich der Transportschnecke bzw. des Mahlwerks erkauft werden. Dadurch kann eine konstruktive Flexibilität geschaffen werden, mit der der Bohnenbehälter leichter an die tatsächlichen Gegebenheiten angepasst werden kann.

Die Funktion des Sicherungselements im Zusammenwirken mit dem Bohnenbehälter kann also durch die korrekte Bemessung des Spalts im Zusammenhang mit der genannten Weglänge sichergestellt werden. Nach einer dazu alternativen Ausgestaltungsform der Erfindung kann der Weg der Bohnen durch die Abgabeöffnung zwischen dem Sicherungselement und dem verletzungsrelevanten Bereich mindestens zweimal maximal rechtwinklig und gegenläufig abgewinkelt sein. Der Weg der Kaffeebohnen bzw. das Profil des Spalts zwischen Sicherungselement und Wandung des Bohnenbehälters erhält damit einen quasi stufen- bzw. treppenförmigen Verlauf. Das Spaltprofil sollte jedoch keine waagrechten Absätze aufweisen, die ein Abrutschen der Bohnen behindern könnten. Daher kann die Abwinkelung maximal rechtwinklig verlaufen. Alle Kanten sind abgerundet auszubilden, um ein Verhaken und Verkanten der Bohnen zu vermeiden. Entscheidend ist der nicht lineare, in entgegengesetzte Richtungen abgewinkelte Verlauf des Bohnenwegs. Einen derart gestalteten wellenförmigen Weg können die Bohnen nämlich nehmen. Die Richtungsänderungen des stufen- bzw. treppenförmigen Verlaufs bzw. die Ausrundungsradien der Wellenform sind dagegen so zu wählen, dass sie von einem menschlichen Finger nicht passiert werden können. Die Erfindung macht sich also die Erkenntnis zunutze, dass ein Eindringen eines menschlichen Fingers nicht nur durch die Spaltbreite und/oder die Weglänge der Bohnen vom Sicherungselement bis zum Mahlwerk bzw. der Transportschnecke verhindert werden kann, sondern auch durch die Gestaltung des Bohnenweges. Dafür reicht jedoch einfaches Abwinkeln nicht aus, weil auch der menschliche Finger gekrümmt werden kann. Die Erfindung nutzt den Umstand, dass ein menschlicher Finger lediglich in eine Richtung gekrümmt werden kann. Weist der Weg der Bohnen dagegen Abwinkelungen in entgegengesetzter Richtung auf, so kann ein menschlicher Finger nicht mehr eindringen. Bei einer derartigen Gestaltung des Spaltprofils kann dafür die Spaltweite vergrößert werden, so dass die Gefahr eines Bohnenstaus verringert werden kann. Die Spaltweite darf allerdings nicht so groß gewählt sein, dass ein linearer Eingriff eines Normfingers möglich wäre. Die Gestaltung des Wegs der Bohnen mit mehrmaligem Richtungswechsel hat zudem den Vorteil, dass auch das Eindringen eines starren Werkzeugs, zum Beispiel eines Löffels, weitgehend ausgeschlossen werden kann.

Die Gestalt des Sicherungselements Ist einerseits so zu wählen, dass es die Abgabeöffnung zuverlässig abdeckt. Andererseits soll es einen Bohnenstau verhindem. Nach einer vorteilhaften Ausgestaltung der Erfindung ist das Sicherungselement daher haubenförmig ausgebildet. Die Hauben- oder Pilzkopfform verhindert, dass sich auf einer Oberseite des Sicherungselements Bohnen ablegen oder festhalten können.

Nach einer weiteren vorteilhaften Ausgestaltung der Erfindung weist das Sicherungselement nur abgerundete bohnenberührte Seiten- oder Mantelflächen auf. Dies hat einerseits zur Folge, dass die Kaffeebohnen an dem Sicherungselement leicht und widerstandsarm abgleiten können. Andererseits kann ein Quetschen oder gar Schneiden eines menschlichen Fingers verhindert werden, sollte er doch einmal zwischen Sicherungselement und Bohnenbehälter im Bereich der Abgabeöffnung gelangen.

Das Prinzip der Erfindung wird im Folgenden anhand einer Zeichnung beispielshalber noch näher erläutert. In der Zeichnung zeigen:
- Figur 1:: wurde gestrichen,
- Figur 2:: ein rotierendes Sicherungselement,
- Figur 3:: ein rotierendes Sicherungselement mit verlängertem Bohnenweg, und
- Figur 4:: ein rotierendes Sicherungselement mit abgewinkeltem Bohnenweg,
I Eine erfinderische Ausgestaltungsform des Sicherungselements zeigt Figur 2. Bei

einer prinzipiell gleichen Anordnung und Zuordnung des Bohnenbehälters 10 zur Transportschnecke 14 besteht der wesentliche Unterschied darin, dass das Sicherungselement 30 ausschließlich an dem oberen Abschnitt 15 der Transportschnecke 14 angeordnet ist. Es weist eine haubenartige bzw. pilzförmige Oberseite 32 und abgerundete Seitenflächen 34 auf. Durch die unmittelbaren Befestigung des Sicherheltselements 30 auf der Transportschnecke 14 ist es beim Betrieb des Kaffeevollautomaten nicht feststehend angeordnet, sondern dreht sich mit der Transportschnecke 14 mit. Es rotiert also in derselben Geschwindigkeit wie die Transportschnecke 14. Dadurch entsteht ein Spalt 26, der mangels Verbindung des Sicherungselements 30 mit dem Bohnenbahälter 10 stegfrei ausgebildet ist und daher den zum Mahlwerk strömenden Bohnen kein Hindernis bietet. Eine Staugefahr der Bohnen am Spalt 26 ist allein damit weitgehend ausgeschlossen. Denn die Bohnen finden im Spalt 26 keinen Halt, an dem sie sich anlegen oder verkanten bzw. verkeilen könnten.

Ein Stauen der Bohnen bzw. eine so genannte Brückenbildung wird außerdem dadurch verhindert, dass das Sicherheitselement 30 im Betrieb des Kaffeevollautomaten immer in Bewegung ist, insbesondere an der engsten Stelle des Bohnenbehälters. Die damit verbundene stetige Umlagerung der Kaffeebohnen reduziert sowohl die Haftreibung der Bohnen untereinander als auch gegenüber der Wandung 11 des Bohnenbehälters 10. Dadurch ist eine Brückenbildung von Anfang an, also auch bei voll gefülltem Bohnenbehälter 10, so gut wie ausgeschlossen. Das Mahlwerk erhält damit immer die erforderliche Zufuhr an Kaffeebohnen, um die vorgesehene Menge an Mahlgut für die Tassenportion bzw.-portionen für die weitere Zubereitung zur Verfügung zu stellen.

Diesen Effekt unterstützt die Gestaltung des Sicherungselements 30. Seine haubenförmige Oberseite 32 fördert ein Abgleiten der Bohnen, so dass sich auch einzelne Bohnen nicht auf der Oberseite 32 halten können. Auch die bohnenberührten Seitenflächen 34 des Sicherungselements 30 sind abgerundet ausgebildet, um den Bohnen keinen Angriffspunkt für ein Verkeilen zu bieten. Die abgerundeten Flächen sorgen vielmehr dafür, dass sich die Bohnen jederzeit von dem bewegten Sicherungselement 30 lösen können. Ein Verkeilen der Bohnen im Spalt 26 ist damit ausgeschlossen.

Die Gestaltung der Seitenflächen 34 dient darüber hinaus auch dazu, dass beim Eingriff eines Benutzers in den Spalt 26 dessen Finger nicht gequetscht oder durch die Rotation des Sicherungselements 30 angeschnitten wird. So vermindert das Sicherungselement 30 auch durch seine äußere Form eine Verletzungsgefahr des Benutzers.

Der Spalt 26 hat an der mit dem Pfeil 36 gekennzeichneten Stelle den geringsten Abstand a zwischen Sicherungselement 30 und der Wandung 11 des Bohnenbehälters 10. Der Pfeil 36 weist also auf die Engstelle und damit auf den geringsten Durchtrittsquerschnitt der Abgabeöffnung 12. Sie liegt in unmittelbarer Nähe des oberen Abschnitts 15 der Transportschnecke 14, von dem wegen seiner Wendeln 16 eine Verletzungsgefahr für den Benutzer ausgehen kann.

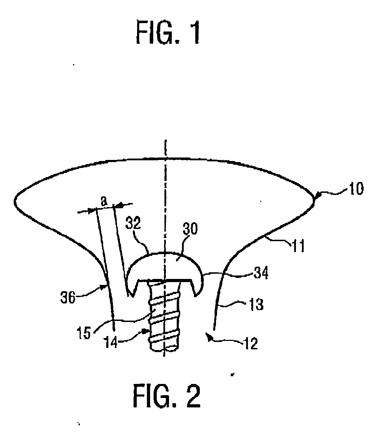

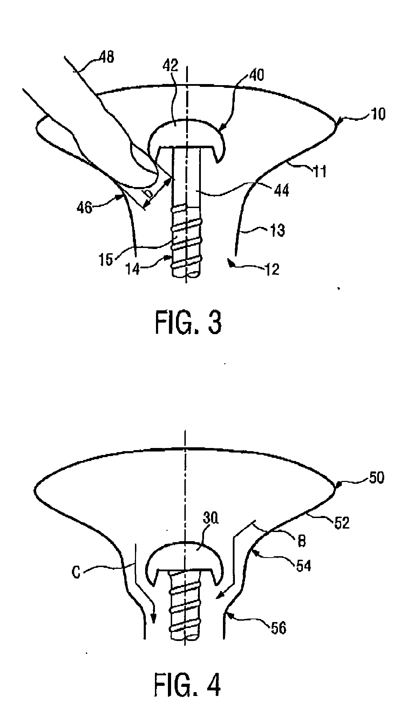

Figur 3 zeigt ein alternatives Sicherungselement 40, das ebenfalls über einen haubenförmigen Kopf 42 verfügt wie das Sicherungselement 30 gemäß Figur 2. Der Kopf 42 sitzt auf einem Stiel 44, mit dem das Sicherungselement 40 auf dem oberen Abschnitt 15 der Transportschnecke 14 befestigt Ist. Es bewirkt also gegenüber der Wandung 11 des Bohnenbehälters 10 eine Engstelle 46 mit einem Abstand b zwischen Sicherungselement 40 und der Wandung 11. Die Engstelle 46 ist gegenüber der Engstelle 36 gemäß Figur 2 höher bzw. von dem Rand 13 der Abgabeöffnung 12 weiter entfernt angeordnet. Sie ist damit auch von dem oberen Bereich 15 der Transportschnecke 14 und damit vom verletzungsrelevanten Bereich der Transportschnecke 14 weiter entfernt. Andererseits ist der Abstand b an der Engstelle 46 größer als der vergleichbare Abstand a gemäß Figur 2. Dadurch können mehr Bohnen die Engstelle 46 passieren, die Gefahr einer Stauung der Bohnen ist hier geringer als an der Engstelle 36 gemäß Figur 2. Trotz des größeren Abstands b besteht jedoch keine Verletzungsgefahr für den Benutzer, weil sein Finger 48 zwar weiter durch die Engstelle 46 hindurchdringen, jedoch nicht bis zum oberen Abschnitt 15 gelangen kann.

Eine weitere Ausgestaltungsform eines rotierenden Sicherungselements zeigt Figur 4. Das dorlige Sicherungselement 30 entspricht dem aus Figur 2. Abweichend dagegen ist der Bohnenbehälter 50 gebildet, dessen Wandung 52 in seinem unteren Bereich stufen- bzw. wellenförmig mit zwei Hochpunkten 54 und 56 ausgebildet ist. Wie auch die Oberflächen des Sicherungselements 30 sind die Hochpunkte 54, 56 abgerundet, um den Bohnen auf ihrem Weg zum Mahlwerk möglichst keinen Widerstand zu bieten.

Die Hochpunkte 54, 56 zwingen die Bohnen auf einen abgewinkelten Weg mit mehrmaligen Richtungsänderungen entsprechend der Pfeile B und C an dem Sicherungselement 30 vorbei. Der mehrmals abgeknickte Ablaufweg B, C dient ebenfalls der Bedienungssicherheit, weil ein menschlicher Finger nicht in entgegengesetzte Richtungen mehrmals abgeknickt werden kann.

Da es sich bei den vorhergehenden, detailliert beschriebenen Sicherungselementen um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Sicherungselements in anderer Form als in der hier beschriebenen erfolgen, wenn dies aus Platzgründen bzw. designerischen Gründen notwendig ist. Ebenso können die in den Figuren 2 bis 4 getrennt beschriebenen Maßnahmen zur Gestaltung des Bohnenwegs Im Bereich der Abgabeöffnung auch kombiniert werden. Welterhin schließt die Verwendung der unbestimmten Artikel "ein" bzw. "eine" nicht aus, dass die betreffenden Merkmale auch mehrfach vorhanden sein können.

### Bezugszeichenliste

- 10, 50: Bohnenbehälter
- 11, 52: Wandung
- 12: Abgabeöffnung
- 14: Transportschnecke
- 15: Oberer Abschnitt
- 16: Wendel
- 30, 40: Sicherungselement
- 32: Oberseite
- 34: Seitenfläche
- 36, 46: Engstelle
- 42: Kopf
- 44: Stiel
- 48: Finger
- 54, 56: Hochpunkt

- A: Transportrichtung
- B, C: Bohnenweg
- a, b: Abstand an der Engstelle 36, 46

## Patentansprüche

1. Kaffeevollautomat mit einem Bohnenbehälter (10; 50), der eine Abgabeöffnung (12) für Bohnen umfasst, die im Betrieb über die Abgabeöffnung (12) in einen Transportschacht mit einer Transportschnecke (14) und/ einem Mahlwerk gelangen, und mit einem Sicherungselement (30; 40) im Bereich der Abgabeöffnung (12), das einen Spalt mit dem Bohnenbehälter (10; 50) bildet, der einen unmittelbaren Eingriff in die Abgabeöffnung (12) verhindert, **dadurch gekennzeichnet, dass** das Sicherungselement (30; 40) im Bereich der Abgabeöffnung (12) auf der Transporschnecke (14) gelagert und mit der Transportschnecke (14) mitdrehend angeordnet ist.

2. Kaffeevollautomat nach Anspruch 1, **dadurch gekennzeichnet, dass** das Sicherungselement (30; 40) an einem in Richtung der Abgabeöffnung (12) weisenden oberen Abschnitt (15) der Transportschnecke (14) befestigt ist.

3. Kaffeevollautomat nach einem der Ansprüche 1 bis 2, **dadurch gekennzeichnet, dass** das Spaltprofil derart ausgebildet ist, dass ein Eingriff eines Normfingers gemäß VDE in einen Bereich der Transportschnecke (14) und des Mahlwerks verhindert ist.

4. Kaffeevollautomat nach einem der Ansprüche 1 bis 3, **dadurch gekennzeichnet, dass** der Weg der Bohnen zwischen dem Sicherungselement (30; 40) und der Transportschnecke (14) mit zunehmender Spaltgröße verlängert ist.

5. Kaffeevollautomat nach einem der Ansprüche 1 bis 4, **dadurch gekennzeichnet, dass** der Weg der Bohnen zwischen dem Sicherungselement (30; 40) und der Abgabeöffnung (12) mindestens zweimal in etwa rechtwinklig und gegenläufig abwinkelt ist.

6. Kaffeevollautomat nach einem der obigen Ansprüche, **dadurch gekennzeichnet, dass** das Sicherungselement (30; 40) haubenförmig ausgebildet ist.

7. Kaffeevollautomat nach einem der obigen Ansprüche, **dadurch gekennzeichnet, dass** das Sicherungselement (30; 40) abgerundete Seitenflächen (34) aufweist.

## Claims

1. Automated coffee machine having a bean container (10; 50) which comprises a dispensing opening (12) for beans, which during operation pass by way of the dispensing opening (12) into a conveyor shaft with a conveyor screw (14) and a grinding mill, and having a safety element (30; 40) in the region of the a dispensing opening (12), which forms a gap with the bean container (10; 50) to prevent direct engagement in the dispensing opening (12), **characterised in that** the safety element (30; 40) is supported in the region of the dispensing opening (12) on the conveyor screw (14) and is disposed so that it rotates with the conveyor screw (14).

2. Automated coffee machine according to claim 1, **characterised in that** the safety element (30; 40) is fastened to an upper segment (15) of the conveyor screw (14) which faces in the direction of the dispensing opening (12).

3. Automated coffee machine according to one of claims 1 to 2, **characterised in that** the gap profile is configured in such a manner that any engagement of a VDE standard finger in a region of the conveyor screw (14) and the mill is prevented.

4. Automated coffee machine according to one of claims 1 to 3, **characterised in that** the path of the beans between the safety element (30; 40) and the conveyor screw (14) is lengthened as the gap size increases.

5. Automated coffee machine according to one of claims 1 to 4, **characterised in that** the path of the beans between the safety element (30; 40) and the dispensing opening (12) is angled at least twice approximately at right angles and in opposing directions.

6. Automated coffee machine according to one of the preceding claims, **characterised in that** the safety element (30; 40) is domed.

7. Automated coffee machine according to one of the preceding claims, **characterised in that** the safety element (30; 40) has rounded side surfaces (34).

## Revendications

1. Machine à café automatique dotée d'un réservoir à grains (10 ; 50) qui comprend une ouverture de décharge (12) de grains, lesquels, pendant le fonctionnement, arrivent dans un puits de transport muni d'une vis de transport (14) et d'un broyeur, et dotée d'un élément de sécurité (30 ; 40) dans la partie de l'ouverture de décharge (12), lequel forme une fente avec le réservoir à grains (10 ; 50), laquelle fente empêche une prise directe dans l'ouverture de décharge (30 ; 40), **caractérisée en ce que** l'élément de sécurité (30 ; 40) est logé sur la vis de transport (14) dans la partie de l'ouverture de décharge (12) et est disposé en tournant en même temps que la vis de transport (14).

2. Machine à café automatique selon la revendication 1, **caractérisée en ce que** l'élément de sécurité (30 ; 40) est fixé sur une section supérieure (15), tournée en direction de l'ouverture de décharge (12), de la vis de transport (14).

3. Machine à café automatique selon l'une quelconque des revendications 1 à 2, **caractérisée en ce que** le profil de la fente est réalisé de manière à ce qu'une prise d'un doigt standard selon VDE soit empêché dans une partie de la vis de transport (14) et du broyeur.

4. Machine à café automatique selon l'une quelconque des revendications 1 à 3, **caractérisée en ce que** le trajet des grains entre l'élément de sécurité (30 ; 40) et la vis de transport (14) est allongé au fur et à mesure que la fente s'agrandit.

5. Machine à café automatique selon l'une quelconque des revendications 1 à 4, **caractérisée en ce que** le trajet des grains entre l'élément de sécurité (30 ; 40) et l'ouverture de décharge (12) est courbé au moins deux fois à peu près en angle droit et en sens inverse.

6. Machine à café automatique selon l'une quelconque des revendications précédentes, **caractérisée en ce que** l'élément de sécurité (30 ; 40) est réalisé en forme de capot.

7. Machine à café automatique selon l'une quelconque des revendications précédentes, **caractérisée en ce que** l'élément de sécurité (30 ; 40) présente des surfaces latérales arrondies (34).
